# EUROPEAN PATENT SPECIFICATION

(11) **EP 4 530 761 B1**
(45) Date of publication and mention of the grant of the patent: **05.08.2026**
(21) Application number: 23810841.9
(22) Date of filing: 10.05.2023
(51) Int. Cl.: G05B 15/02, G05B 19/418, H04L 12/28

(54) **DEVICE CONTROL METHOD AND APPARATUS, DEVICE, AND STORAGE MEDIUM**
VERFAHREN UND VORRICHTUNG ZUR GERÄTESTEUERUNG, VORRICHTUNG UND SPEICHERMEDIUM
PROCÉDÉ ET APPAREIL DE COMMANDE DE DISPOSITIF, DISPOSITIF ET SUPPORT DE STOCKAGE

(30) Priority: 23.05.2022 CN 202210565411
(43) Date of publication of application: 02.04.2025
(73) Proprietor: Lumi United Technology Co., Ltd., Shenzhen, Guangdong 518000 (CN)
(72) Inventor: SONG, Yongheng, Shenzhen, Guangdong 518000 (CN); HUANG, Canwu, Shenzhen, Guangdong 518000 (CN); YOU, Yanyun, Shenzhen, Guangdong 518000 (CN)
(74) Representative: Metida
(86) International application number: PCT/CN2023/093300
(87) International publication number: WO 2023/226768

(56) References cited:
- CN-A- 108 037 675
- CN-A- 111 650 845
- CN-A- 112 034 726
- CN-A- 112 114 527
- CN-A- 112 925 219
- CN-A- 113 485 129
- CN-A- 114 280 949
- CN-A- 114 326 420
- CN-A- 115 016 302
- US-A1- 2017 357 425

## Description

### TECHNICAL FIELD

The present disclosure relates to the technical field of Internet of Things (IoT), and in particular, the present disclosure relates to a device control method, apparatus, and system, an electronic device, and a storage medium.

### BACKGROUND

With rapid development of IoT technology, application of smart devices is gradually becoming widespread. In order to improve convenience of users' operation on smart devices, not only can device linkage be set, for example, if it is detected that someone is in a living room, lights are automatically turned on, but also various modes can be set, for example, when a user leaves home, air conditioning, lights, socket switches, and so on are automatically turned off through a home leaving mode.

However, current control aiming at multiple smart devices, such as multiple smart devices in a home leaving mode, often requires controlling them one by one based on multiple instructions. It can also be considered that multiple smart devices need to execute corresponding setting actions in sequence, which results in significant network latency and is prone to affect users' using experience.

As can be seen from the above, how to reduce network latency of multiple devices executing multiple actions still needs to be solved.

CN1211527A discloses an equipment control device and method, and a computer readable storage medium and relates to the smart home field. The equipment control device comprises a mode selection unit, a knob and a processing unit, wherein the mode selection unit and the knob are electrically connected with the processing unit, the mode selection unit outputs a mode selection instruction to the processing unit according to operation of a user, the knob outputs an orthogonal pulse signal to the processing unit according to rotation operation of the user, the processing unit determines rotation information of the knob according to the orthogonal pulse signal, generates a first control instruction according to the rotation information and the mode selection instruction, and sends the first control instruction to the intelligent device. Therefore, under the condition of no gateway network or gateway offline, a user can realize localized control on the intelligent equipmentby operating the mode selection unit and the knob.

CN114326420A discloses an intelligent equipment grouping method, an intelligent grouping device, intelligent equipment and a storage medium, the intelligent equipment grouping method is applied to control equipment in a group control system, the control equipment is connected with multiple execution equipment, the group control system further comprises a server, and the intelligent equipment grouping method comprises the steps of receiving a grouping instruction sent by the server; in response to the grouping instruction, the execution devices are divided into at least one device group, and the execution devices in the device group support unified control; and generating and sending grouping success information to the server. According to the method, the state that the control equipment executes the grouping instruction is fed back as the grouping success information instead of the result that the multiple pieces of execution equipment are successfully associated with the equipment group as the grouping success information, so that the situation that in the equipment grouping process, the grouping success information is successfully associated with the equipment group is avoided; the control equipment needs to wait for a long time due to feedback timeout or feedback failure of the execution equipment, so that the grouping efficiency of the equipment grouping process is improve.

CN113485129A discloses a method for controlling and reporting equipment in a contextual model of a whole-house intelligent system. The method comprises the following steps: S1, recording a full-amount scene table of a corresponding scene according to user setting; S2, after the user confirms that setting is finished, genrating configuration information about the scene, and sending the configuration information to related equipment of the scene according to the full-amount scene table; and S3, receiving configuration feedback information of related equipment, and updating the full-amount scene table according to the configuration feedback information. When a call command of a user about a scene is received after the user confirms that setting is finished, the following steps are executed: A1, a full-volume scene table is retrieved, a scene command is sent to configured related equipment in a multicast mode, meanwhile, whether unconfigured related equipment exists or not is judged, if yes, the step A2 is executed, and if not, the step A2 is executed; and A2, corresponding control commands are unicast to the unconfigured related equipment according to the full-amount scene table. Based on the scheme, the user can call the scene after setting the scene without waiting for the end of system configuration, so that the scene execution efficiency is effectively improved, and the user experience is optimized.

### SUMMARY OF THE DISCLOSURE

Embodiments of the present disclosure provide a device control method, apparatus, and system, an electronic device, and a storage medium, which can solve the problem existing in the related art that network latency of multiple devices executing multiple actions is significant. The technical solutions are as follows.

According to one aspect of embodiments of the present disclosure, a device control method is executed by a server end, the method comprises: obtaining a scene control instruction for multiple devices based on a constructed scene for the multiple devices, wherein the scene control instruction is configured to instruct each of the devices to execute a corresponding scene action in the constructed scene; wherein the constructed scene is constructed by respectively configuring scene actions for the multiple devices; identifying, based on the scene control instruction and by performing configuration detection of scene action records on the devices, a first device and/or a second device among the devices, wherein the first device is a device that supports configuration of a scene action record and has been configured with the scene action record; wherein the second device is a device that does not support configuration of a scene action record; wherein the scene action record is configured for the first device according to scene configuration data, and is a record of a scene action that the first device is configured and allowed to execute in the constructed scene; wherein the scene configuration data is generated when a scene for the multiple devices is constructed in a user terminal; if at least one first device is identified, sending the scene control instruction to the first devices in a multicast transmission mode to instruct the first devices to respond to the scene control instruction and synchronously execute a scene action recorded for the first devices in the scene action record; and/or if at least one second device is identified, respectively sending (550) a device control instructions corresponding to the scene control instruction to the second devices in a unicast transmission mode, thereby making the second devices respectively respond to the device control instruction and execute a corresponding scene action.

According to one aspect of embodiments of the present disclosure, a device control apparatus is provided, the apparatus comprises: an instruction aquirer configured for obtaining a scene control instruction for multiple devices based on a constructed scene for the multiple devices, wherein the scene control instruction is configured to instruct each of the devices to execute a corresponding scene action in the constructed scene; wherein the constructed scene is constructed by respectively configuring scene actions for the multiple devices; a device recognizer configured for identifying, based on the scene control instruction and by performing configuration detection of scene action records on the devices, a first device and/or a second device among the devices, wherein the first devices are devices that supports configuration of a scene action record and has been configured with the scene action record; wherein the second device is a device that does not support configuration of a scene action record; wherein the scene action record is configured for the first device according to scene configuration data, and is a record of a scene action that the first device is configured and allowed to execute in the constructed scene; wherein the scene configuration data is generated when a scene for the multiple devices is constructed in a user terminal; and an instruction transmitter configured for: if at least one first device is identified, sending the scene control instruction to the first devices in a multicast transmission mode to instruct the first devices to respond to the scene control instruction and synchronously execute a scene action recorded for the first devices in the scene action record; and/or if at least one second device is identified, respectively sending a device control instructions corresponding to the scene control instruction to the second devices in a unicast transmission mode, thereby making the second devices respectively respond to the device control instruction and execute a corresponding scene action.

According to one aspect of embodiments of the present disclosure, a device control system is provided, the system comprises: a server end configured for obtaining a scene control instruction for multiple smart devices based on a constructed scene for the multiple devices, and in a case that at least one first device and/or one second device is identified in the smart devices, sending the scene control instruction to the first device in a multicast transmission mode, wherein the scene control instruction is configured for instructing the smart devices to execute corresponding scene actions respectively; wherein the first device is a smart device that has been configured with scene action record; and/or sending a device control instructions corresponding to the scene control instruction to the second devices in a unicast transmission mode, thereby making the second devices respectively respond to the device control instruction and execute a corresponding scene action; wherein the constructed scene is constructed by respectively configuring scene actions for the multiple devices; wherein the first device is a device that supports configuration of a scene action record and has been configured with the scene action record; wherein the second device is a device that does not support configuration of a scene action record; and smart devices configured for: in response to the received scene control instruction, and based on the configured scene action record, executing scene actions related to themselves in the scene action record.

According to one aspect of embodiments of the present disclosure, an electronic device comprises at least one processor and at least one memory, wherein the memory stores computer readable instructions, and the computer readable instructions are executed by the one or more processors to make the electronic device implement the above device control methods.

According to one aspect of embodiments of the present disclosure, a storage medium stores computer readable instructions, the computer readable instructions are executed by one or more processors to implement the above device control methods.

According to one aspect of embodiments of the present disclosure, a computer program product is provided, the computer program product comprises computer readable instructions, the computer readable instructions are stored in a storage medium; one or more processor of an electronic device reads the computer readable instructions from the storage medium, and loads and executes the computer readable instructions to make the electronic device implement the above device control methods.

### BRIEF DESCRIPTION OF THE DRAWINGS

In order to explain technical solutions in embodiments of the present disclosure more clearly, drawings required to be used in description of the embodiments of the present disclosure will be briefly introduced below. It is obvious that the drawings in the following description are only some embodiments of the present disclosure. For one of ordinary skill in the art, other drawings can be further obtained according to these drawings on the premise of paying no creative work.
FIG. 1 is a schematic diagram of an implementation environment involved by an embodiment of the present disclosure.
FIG. 2 is a method flowchart of a scene construction process involved by an embodiment of the present disclosure.
FIG. 3 is a first schematic diagram of a scene construction process involved by an embodiment of the present disclosure.
FIG. 4 is a second schematic diagram of a scene construction process involved by an embodiment of the present disclosure.
FIG. 5 is a flowchart of a device control method shown according to an exemplary embodiment.
FIG. 6 is a method flowchart of scene action record configuration process shown according to an exemplary embodiment.
FIG. 7 is a flowchart of the step 430 involved by the embodiment corresponding to FIG. 6 in an embodiment.
FIG. 8 is a flowchart of another device control method shown according to an exemplary embodiment.
FIG. 9 is a flowchart of another device control method shown according to an exemplary embodiment.
FIG. 10 is a schematic diagram of a gateway sending different instructions to a first device and a second device shown according to an exemplary embodiment.
FIG. 11 is a flowchart of another device control method shown according to an exemplary embodiment.
FIG. 12 is a structural block diagram of a device control apparatus shown according to an exemplary embodiment.
FIG. 13 is a structural block diagram of another device control apparatus shown according to an exemplary embodiment.
FIG. 14 is a structural block diagram of a device control system shown according to an exemplary embodiment.
FIG. 15 is a hardware structural diagram of an electronic device shown according to an exemplary embodiment.
FIG. 16 is a structural block diagram of an electronic device shown according to an exemplary embodiment.

### DETAILED DESCRIPTION

Embodiments of the present disclosure will be described in detail below. Examples of the embodiments are shown in the accompanying drawings, wherein identical or similar reference numbers from beginning to end represent identical or similar elements or elements with identical or similar functions. The embodiments described below with reference to the accompanying drawings are exemplary and are only used to explain the present disclosure, and cannot be interpreted as limiting the present disclosure. The invention is defined in the independent claims. Advantageous embodiments are set out in the dependent claims.

Technicians in this technical field can understand that unless specifically stated, the singular forms "a/an", "one", "said", and "the" used here may also include plural forms. It should be further understood that the term "include" used in the specification of the present disclosure refers to the presence of the described features, integers, steps, operations, elements, and/or components, but does not exclude the presence or addition of one or more other features, integers, steps, operations, elements, components, and/or combinations thereof. It should be understood that when we refer to a component as being "connected" or "coupled" to another component, it can be directly connected or coupled to another component, or there may also exist an intermediate component. In addition, "connection" or "coupling" used here may include wireless connection or wireless coupling. The wording "and/or" used here includes all or any units and all combinations of one or more associated listed items.

The following are introduction and explanation for several nouns involved by the present disclosure.

Multicast: also known as multi-objective broadcasting or multiple-cast, is a point to multi-point network communication method. It is also considered as a network communication method for transmitting data between one sender and multiple receivers. The sender only sends one piece of data, and the data received by all of the multiple receivers is a copy of this piece data, that is, the same data.

Unicast: it is a point-to-point network communication method, which is mainly used for data transmission between one sender and one receiver. If it needs to be applied to transmission of the same data between one sender and multiple receivers, the difference from multicast is that the sender still needs to send multiple copies of the same data.

Advantageous effect brought by technical solutions provided by the present disclosure is as follows.

In above technical solutions, based on an obtained scene control instruction for multiple devices, the scene control instruction is used for instructing the devices to respectively execute corresponding scene actions. Thus, if it is identified that at least one first device, that is, a device that has been configured with scene action record, the scene control instruction can be sent to the first devices according to a multicast transmission mode, so as to instruct the first devices to respond the scene control instruction and execute a scene action recorded by the first device in the scene action record. In other words, by the way of scene action record, a scene action executed correspondingly by at least one first device is recorded and configured for the first device; thus, during a device control process, by sending the scene control instruction to the first devices in the multicast transmission mode, the first devices can be controlled to synchronously execute corresponding scene actions recorded by the first devices in the configured scene action record, thereby avoiding controlling multiple smart devices one by one based on multiple instruction, that is, avoiding multiple smart devices from sequentially executing corresponding set actions. Thus, network latency of multiple devices executing multiple actions is reduced, such that the problem of large network latency of multiple devices executing multiple actions existing in the related art can be effectively solved.

In order to make purposes, technical solutions, and advantages of the present disclosure be clearer, embodiments of the present disclosure will be further described in detail below in combination with drawings.

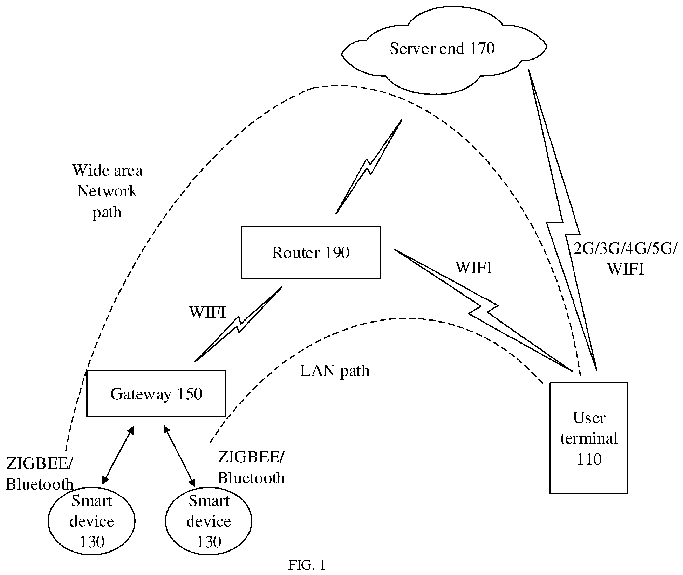

FIG. 1 is a schematic diagram of an implementation environment involved by an embodiment of the present disclosure. The implementation environment includes a user terminal 110, a smart device 130, a gateway 150, a server end 170, and a router 190.

Specifically, the user terminal 110, which may also be considered as a user end or a terminal, can perform deployment (which can also be considered as installment) of a client end associated with the smart device 130; the user terminal 110 may be electronic devices such as smartphones, tablets, laptops, desktop computers, smart control panels, and other devices with display and control functions, and is not limited here.

Among them, associating the client end with the smart device 130 is essentially that a user registers an account in the client end and perform configuration for the smart device 130 in the client. For example, the configuration includes adding a device identifier for the smart device 130 and the like, such that when the client end is running in the user terminal 110, functions such as device control related to the smart device 130 can be provided for the user. The client end can be in the form of application programs, and can also be in the form of web pages; correspondingly, an interface of the client end for device display can be in the form of program windows, and can also be in the form of web pages, which are not limited here.

The smart device 130 is deployed in the gateway 150, communicates with the gateway 150 through its own configured communication module, and thus is controlled by the gateway 150. It should be understood that the smart device 130 generally refers to one of multiple smart devices 130, and the embodiment of the present disclosure only uses a smart device 130 as an example; that is, this embodiment of the present disclosure does not limit the number and device types of smart devices deployed in the gateway 150. In one application scene, the smart device 130 accesses the gateway 150 through a local area network, and is thereby deployed in the gateway 150. A process of the smart device 130 accessing the gateway 150 through a local area network includes: a local area network is established by the gateway 150 at first, and the smart device 130, by connecting the gateway 150, joins in the local area network established by the gateway 150. The local area network includes but is not limited to ZIGBEE or Bluetooth. Among them, the smart device 130 can be smart printers, smart fax machines, smart cameras, smart air conditioners, smart door locks, smart lights, smart fans, smart speakers, or electronic devices equipped with communication modules such as human sensors, door and window sensors, temperature and humidity sensors, water immersion sensors, natural gas alarms, smoke alarms, wall switches, wall sockets, wireless switches, wireless wall sticker switches, Rubik's Cube controllers, curtain motors, etc. In embodiments of the present disclosure, the smart device 130 especifically refers to a smart doorlock.

Interaction between the user terminal 110 and the smart device 130 can be realized by a local area network, and can also be realized by a wide area network. In an application scene, the user terminal 110 establishes communication connection in wired or wireless forms with the gateway 150 through the router 190, for example, the wired or wireless forms include but are not limited to WIFI or the like, so that the user terminal 110 and the gateway 150 are deployed in the same local area network, and thus the user terminal 110 is enabled to achieve interaction with the smart device 130 through a local area network path. In another application scene, the user terminal 110 establishes communication connection in wired or wireless forms with the gateway 150 through the server end 170, for example, the wired or wireless forms include but do not limited to 2G, 3G, 4G, 5G, WIFI, etc., so that the user terminal 110 and the gateway 150 are deployed in the same wide area network, and thus the user terminal 110 is enabled to achieve interaction with the smart device 130 through a wide area network path.

Among them, the server end 170 can also be considered as a cloud, a cloud platform, a platform side, a server side, etc. The server side 170 can be a single server, and can also be a server cluster composed of multiple servers, or a cloud computing center composed of multiple servers, so as to better provide background services to a large amount of user terminals 110. For example, the background services include but are not limited to device control services, and so on.

It is worth mentioning that, compared with the user terminal 110 which can be considered as a user end, both the server end 170 and the gateway 150 can be considered as embodiments of a server end, and are not specifically limited here.

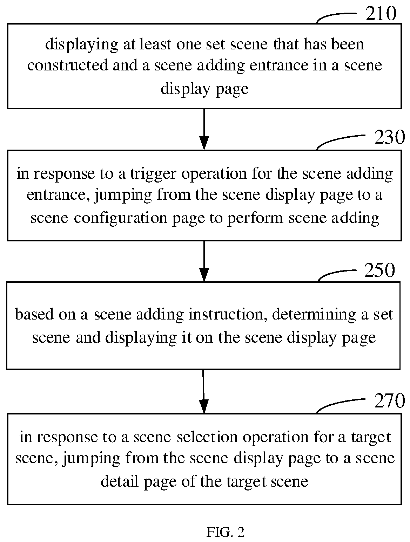

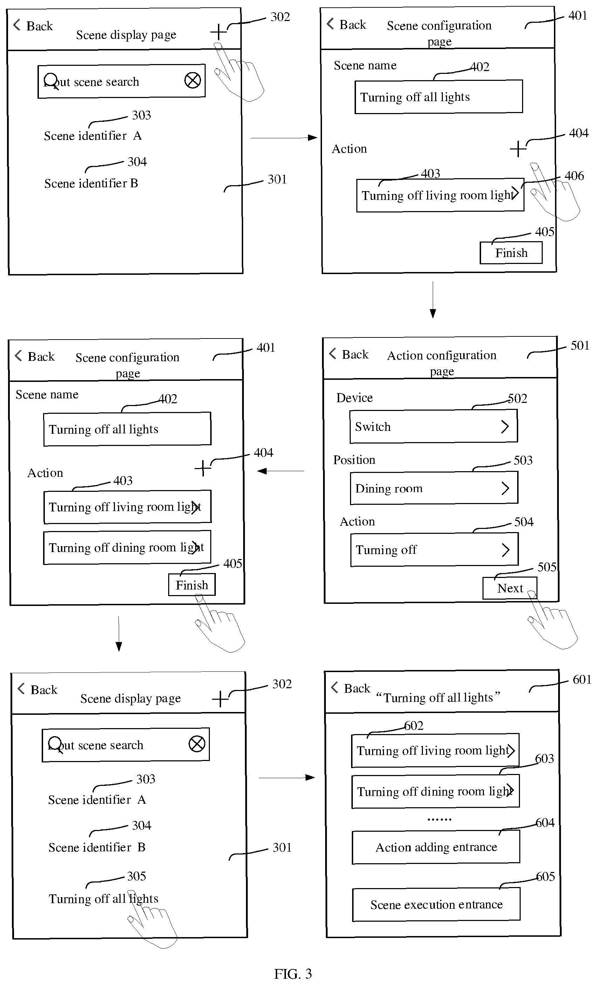

After introducing an application environment involved by an embodiment of the present disclosure, a scene construction process involved by an embodiment of the present disclosure is introduced below in combination with FIG. 2 and FIG. 3. Among them, FIG. 2 shows a method flowchart of a scene construction process in an embodiment, FIG. 3 shows a schematic diagram of a scene construction process in a user terminal in an embodiment.

As shown in FIG. 2, a scene construction process can include the followings steps.

Step 210, displaying at least one scene that has been constructed and a scene adding entrance in a scene display page.

As shown in FIG. 3, in a scene display page 301, a scene 303 and a scene 304 that have been constructed and a scene adding entrance 302 are displayed. It should be noted that scenes are uniquely represented by scene identifiers, similarly, smart devices are uniquely represented by device identifiers, and scene actions are uniquely represented by action identifiers. These identifiers can be in the form of letters, numbers, strings, text, graphics, etc., and are not limited here. For example, a scene identifier A uniquely represents the scene 303, and a scene identifier B uniquely represents the scene 304.

Step 230, in response to a trigger operation for the scene adding entrance, jumping from the scene display page to a scene configuration page to perform scene adding.

In a possible implementation, at least one action that has been configured, as well as a scene name configuration entrance and an action adding entrance are displayed in the scene configuration page_{∘}

As shown in FIG. 3, if a user clicks the "+" control 302 in the scene display page 301, the scene display page 301 jumps to a scene configuration page 401. At the same time, in the scene configuration page 401, not only is a configured action "turning off the living room light" 403 displayed , but also a scene name configuration entrance 402 and an action adding entrance 404 are displayed. Among them, the clicking operation of the user is regarded as a trigger operation for the scene configuration entrance.

Step 250, based on a scene adding instruction, adding a scene and displaying it on the scene display page.

In a possible implementation, the scene adding instruction is triggered by at least one of the following operations: an inputting operation used to input a scene identifier for a scene; an action configuration operation used to configure at least one smart device for executing a corresponding scene action in a scene; and a scene confirming operation used to confirm completion of scene adding.

As shown in FIG. 3, in the inputting control 402, "turning off all lights" can be input for a scene and serve as a scene identifier of a set device, and the inputting operation of this user is regarded as an inputting operation; if a user clicks a "+" control 404 in the scene configuration page 401, it is represented that the user desires adding a scene action executed by a smart device in the scene, alternatively, if the user clicks a ">" control 406, it is represented that the user desires modifying a scene action executed by a smart device in the scene, the aforesaid clicking operations of this user can be all regarded as action configuration operations; if the user clicks a "finish" control 405, it is represented that the user confirms completion of scene adding, the clicking operation of the user is regarded as a scene confirming operation. Based on at least one of the aforesaid operations, it is possible to trigger generating a scene adding instruction, confirm that a scene is represented by a scene identifier "turning off all lights", and display it, i.e., "turning off all lights", on the scene display page 301.

Optionally, the step 250 can further include the following steps: in response to an action configuration operation, jumping from the scene configuration page to an action configuration page; based on an action configuration instruction triggered in the action configuration page, confirming a scene action executed by a smart device in the scene and displaying it in the scene configuration page.

In a possible implementation, the action configuration instruction is triggered by at least one of the following operation: a device selection operation used to select a smart device for a scene; a position selection operation used to select a deploying position for the smart device selected in the scene, wherein the deploying position includes but is not limited to: a master bedroom, a guest bedroom, a bathroom, a dining room, a living room, a study room, a storage room, a dressing room, a balcony, a kitchen, a hallway, etc., and itt can also be considered that the the deploying position specifically limits a type of the smart device, for example, if a deploying position of "switch" is a dining room, it is represented that the smart device is a "dining room light"; alternatively, if the deploying position of "switch" is a living room, it is represented that the smart device is a "living room light"; an action selection operation used to select a scene action for the smart device selected in the scene; and an position selection operation used to confirm configuration of the scene action in the scene.

As shown in FIG. 3, in the selection control 502, "switch" connected with a light can be selected for the scene and serve as a smart device selected for the scene, the selection operation of the user is regarded as a device selection operation; in the selection control 503, "dining room" can be selected for the switch and serve as a deploying position selected for the smart device selected in the scene, the selection operation of the user is regarded as a position selection operation; in the selection control 504, "turning off" can be selected for the switch and serve as a scene action selected for the smart device selected in the scene; if the user clicks the "next" control 505, it is represented that the user confirms that the scene action in the scene completes configuration, the clicking operation of the user is regarded as an action confirming operation. Based on at least one of the aforesaid operations, it is possible to trigger generating an action configuration instruction, confirm that a scene action executed in the scene by the smart device "switch" deployed in "dining room" and connected with a light is "turning off", and display it, i.e., "turning off a dining room light" in the scene configuration page 401.

Step 270, in response to a scene selection operation for a target scene, jumping from the scene display page to a scene detail page of the target scene.

In FIG. 3, if a user clicks a scene 305 represented by the scene identifier "turning off all lights", it is represented that the user selects the scene 305 as a target scene. At this time, the scene display page 301 jumps to a scene detail page 601 of the scene 305, i.e., "turning off all lights", and the scene detail page 601 displays at least a scene action executed in the scene 305 by at least one smart device, for example, a living room light executes turning off, i.e., "turning off the living room light" 602 in the scene 305; a dining room light executes turning off, i.e., "turning off the dining room light" 603 in the scene 305, and so on. Among them, a clicking operation of the user is regarded as a scene selection operation for the target scene. At the same time, the scene detail page 601 further displays a scene execution entrance 605, which provides a function of scene one-click execution for the user, so as to indicate at least one smart device to execute a corresponding scene action in the scene. For example, if the user clicks the scene execution entrance 605, it is considered as one-click execution of the scene action "turning off all lights", thus the living room light and the dining room light are turned off correspondingly, thereby realizing controlled execution of the scene action "turning off all lights".

Similarly, in the scene configuration page 401 and the scene detail page 601, it is also possible to form an action configuration operation through the control 603 and the action adding entrance 604, so as to add/modify a scene action executed by a smart device in a scene based on the action configuration operation. Of course, in other embodiments, the scene configuration page and the scene detail page can also be combined into the same page based on use experience of a user, which does not form specific limitation here.

It should be additionally noted that besides the controlled execution scene shown in FIG. 3, there is also an automated scene in the constructed scenes in the user terminal, its construction process is basically the same as the construction process of the controlled execution scene. The difference is that in the automated scene, in addition to the need of configuring relevant scene actions, a relevant triggering condition also needs to be configured. That is to say, the controlled execution scene refers to the smart device that has performed scene action configuration in the controlled execution scene executes a corresponding scene action only when the user clicks the scene execution entrance; while the automated scene refers to that the smart device that has performed scene action configuration in the automated scenario will automatically execute a corresponding scene action if the triggering condition configured in the automated scene is met.

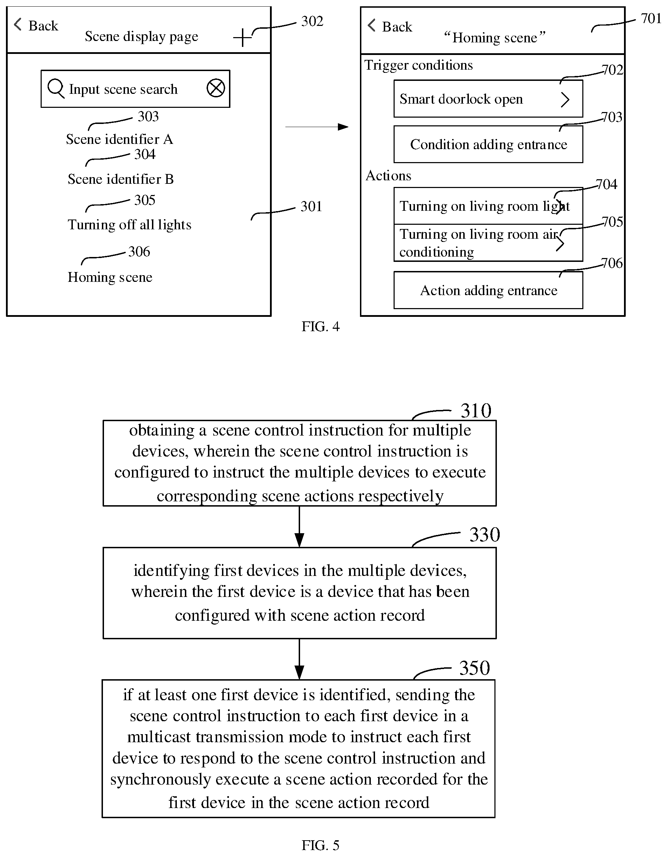

Now, with reference to FIG. 4, taking the automated scene being a homing scene as an example, the triggering condition in the automated scene differing from the controlled execution scenario are explained in detail as follows.

As shown in FIG. 4, assuming that an automated scene 306 has been constructed and displayed in the scene display page 301 through a scene identifier "homing scene", thus when a user clicks the scene identifier, a scene detail page 701 of the automated scene 306 can be entered. In the scene detail page 701, the displayed triggering condition is: opening a smart doorlock; and the displayed scene actions are: turning on a living room light, and turning on a living room air conditioning. A condition adding entrance 703 used to add triggering conditions and an action adding entrance 706 used to add scene actions are further displayed. In addition, modifying triggering conditions can be implemented through a control 702, and modifying scene actions can be implemented through the controls 704, 705. Based on this, with construction of the automated scene 306, when a user returns home and make the smart doorlock open, it is considered that the triggering condition configured in the automated scene 306 is met. At this time, the living room light and the living room air conditioning configured with scene actions in the automated scene 306 will automatically execute corresponding scene actions, that is, automatically turning on the living room light and automatically turning on the living room air conditioning, thereby realizing automatic execution for the homing scene.

It is worth mentioning that specific behaviors of the aforesaid operations may vary depending on different input components (e.g., a touch layer covering on a display screen, a mouse, a keyboard, and the like) configured by the user terminal. For example, if the user terminal is a smartphone with a touch layer configured, the above operations can be gesture operations such as clicking, sliding, and so on; for a user terminal being a laptop with a mouse configured, the above operations can be mechanical operations such as drag and drop, click, double-click, etc., which are not limited here. From this, it can be seen that as scenes are constructed in the user terminal, users can use the controlled execution scene or the automated scene constructed in the user terminal to control multiple devices to execute multiple actions.

A device control process specifically refers to: as shown in FIG. 5, step 310, obtaining a scene control instruction for multiple devices, wherein the scene control instruction is configured to instruct the multiple devices to execute corresponding scene actions respectively; step 330, identifying first devices in the multiple devices, wherein the first device is a device that has been configured with scene action record; step 350, if at least one first device is identified, sending the scene control instruction to each first device in a multicast transmission mode to instruct each first device to respond to the scene control instruction and synchronously execute a scene action recorded for the first device in the scene action record.

In the above process, synchronously controlling multiple devices to execute multiple actions based on one scene control instruction is realized, it is avoided that multiple smart devices are controlled one by one based on multiple instructions, that is, it is avoided that multiple smart devices execute corresponding set actions sequentially, thus network latency of multiple devices executing multiple actions is reduced, so that the problem of significant network latency of multiple devices executing multiple actions existing in the related art can be effectively solved.

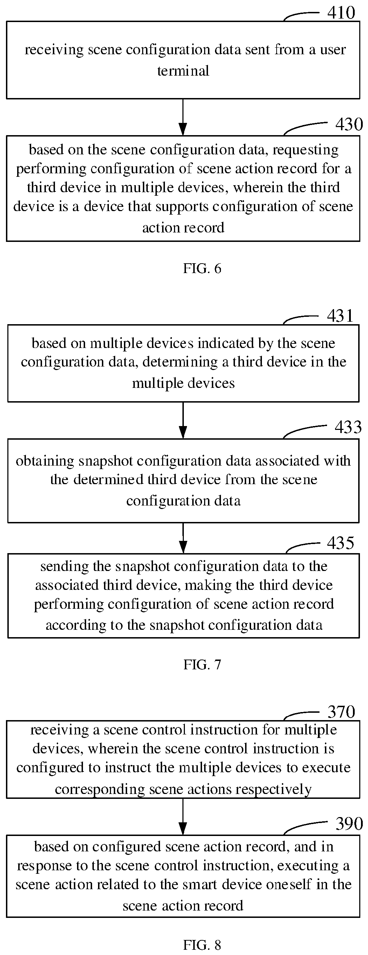

Now, with reference to FIG. 6 to FIG. 7, the configuration of the scene action record in the device control process will be first explained in detail below, taking application of this configuration process to an electronic device as an example to explain. Among them, the electronic device can be the gateway 150 in FIG. 1, and can also be the server end 170, the user terminal 110, and so on in FIG. 1, which are not specifically limited here.

As shown in FIG. 6, a configuration process of the scene action record can include the following steps.

Step 410, receiving scene configuration data sent from a user terminal.

Among them, the scene configuration data is generated when a scene is constructed in the user terminal, the scene configuration data indicates at least scene actions which are configured to be allowed to be executed by multiple devices.

It should be understood that with different scenes, even the same smart device (hereinafter referred to as the device) may have different scene actions that are configured to be allowed to be executed. For example, if the scene is a main bedroom, when the owner is sleeping, a smart fan is turned on; if the scene is a bathroom, when the owner leaves, the smart fan will turn off. Therefore, the scene actions configured to be executed for the device are on the premise of the scene, when the scene varies, the scene configuration data also varies. For example, scene configuration data A corresponds to a controlled execution scene, the scene configuration data A is used to indicate scene actions that are configured to be allowed to be executed by multiple devices in the controlled execution scenario; scene configuration data B corresponds to an automated scene, the scene configuration data B is used to indicate triggering conditions configured in the automated scene, that is, indicate device statuses when multiple devices meet the triggering conditions in the automated scene, and is also used to indicate scene actions that are configured to be allowed to be executed by multiple devices in the automated scene.

In a possible implementation, the scene configuration data includes at least a scene identifier of a scene, a device identifier of at least one device, and an action identifier of a scene action corresponding to a device.

Step 430, based on the scene configuration data, requesting performing configuration of scene action record for a third device in multiple devices.

Among them, a third device is a device that supports configuration of scene action record. Correspondingly, a first device is a device that has completed configuration; a second device is a device that does not support configuration of scene action record, that is, a device that has not performed configuration.

Scene action record refers to record of scene actions that are configured to be allowed to executed by a device in a scene, and can be understood as snapshot data for device functions, for example, an executed action supported by the device can be packaged as a snapshot action, and data containing the snapshot action can be scene action record. Correspondingly, configuration of scene action record refers to storing scene action record in the third device, so that the third device knows in advance scene actions that can be executed by itself in the scene.

Specifically, as shown in FIG. 7, step 430 can include the following steps.

Step 431, based on multiple devices indicated by the scene configuration data, determining a third device in the multiple devices.

In a possible implementation, whether a device supports configuration of scene action record is determined through a device identifier, for example, a device identifier of supporting configuration of scene action record is stored in advance in the server end. In a possible implementation, whether a device supports configuration of scene action record is determined through device version information, for example, device version information of supporting configuration of scene action record is stored in advance in the server end. Of course, in other embodiments, whether a device supports configuration of scene action record can also be determined through adding a snapshot identifier, for example, if the server end identifies that a snapshot identifier carried by a device is 1, it is represented that the device supports configuration of scene action record, this does not constitute a specific limitation here.

Step 433, obtaining snapshot configuration data associated with the determined third device from the scene configuration data.

Among them, the snapshot configuration data is used to indicate a scene action that is configured to be allowed to be executed by the third device.

In a possible implementation, the snapshot configuration data includes at least a device identifier of at least one third device, and an action identifier corresponding to a scene action of the third device.

Step 435, sending the snapshot configuration data to the associated third device, making the third device performing configuration of scene action record according to the snapshot configuration data.

Thus, upon completion of the configuration of the scene action record, the third device is transformed into the first device that has completed the configuration.

For example, assuming that in a scene A, a wall switch B1 is turned on (action identifier is C1), a brightness of a light B2 is 50% (action identifier is C2), and a temperature of an air conditioning B3 is 26°C (action identifier is C3). Among them, the light B2 and the air conditioning B3 support configuration of scene action record, the wall switch B1 does not support configuration of scene action record.

Thus, scene configuration data={A, B1(C1), B2(C2), B3(C3)}.

The light B2 and the air conditioning B3 are third devices, thus it is obtained that snapshot configuration data associated with the third devices={ B2(C2), B3(C3)}.

In a possible implementation, the configuration of the scene action record specifically refers to storing a scene identifier of a scene, a device identifier of a third device, and an action identifier of a scene action into the third device. Taking the aforesaid examples to explain, for the light B2, it stores the action identifier C2 of executing an scene action in the scene A using it; therefore, during a following process of multiple devices executing multiple actions in the scene A, it is possible to execute according to the scene action represented by the pre-stored action identifier C2, which can also be considered as a scene action related to itself in the configured scene action record, that is, adjust the brightness to 50%.

It is worth mentioning that during the process of configuration of the scene action record, in a possible implementation, the gateway can send parts in snapshot configuration data corresponding to each third device to the third device, for example, the light B2 can only receive the action identifier C2 of executing an scene action in the scene using it, thereby reducing the amount of data transmission between the gateway and the third device and facilitating improvement of transmission efficiency. In another possible implementation, the gateway can also send all parts of snapshot configuration data to each third device. For example, the light B2 can not only receive the action identifier C2 of executing a scene action in the scene using it, but also receive the action identifier C3 of using the air conditioner B3 executing a scene action in the scene, thereby reducing the processing burden on the gateway and facilitating improvement of processing efficiency of the gateway. At this point, the light B2 needs to further perform configuration of scene action record in combination of its own device identifier B2, so that it can execute scene actions related to itself in the scene action record in the future, which are not limited here.

In the above process, configuration related to scene action record of devices is implemented, so that the devices quickly execute scene actions related to themselves based on configured scene action record the scene action record in the future.

In a possible implementation, a device control method is provided, the method can be applied in an electronic device, the electronic device can be, for example, the smart device 130 in FIG. 1. As shown in FIG. 8, the device control method can include the following steps: step 370, receiving a scene control instruction for multiple devices, wherein the scene control instruction is configured to instruct the multiple devices to execute corresponding scene actions respectively; step 390, based on configured scene action record, and in response to the scene control instruction, executing a scene action related to the smart device oneself in the scene action record. In a possible implementation, taking the method being executed by a device control system and implemented through interaction between a server end and smart devices as an example to explain; wherein the server end includes but is not limited to the gateway 150 and the server end 170 shown in FIG. 1, and the smart device can be the smart device 130 in FIG. 1; correspondingly, the device control method can include the following steps: the server end obtaining a scene control instruction for multiple smart devices, and in a case that at least one first device is identified from the smart devices, sending the scene control instruction to the first devices in a multicast transmission mode, wherein the scene control instruction is configured to instruct the smart devices to execute corresponding scene actions respectively, and the first device is a smart device that has been configured with scene action record; the first devices, in response to the received scene control instruction, based on the configured scene action record, executing scene actions related to themselves in the scene action record. Thus, sending one piece of instruction by a server end (e.g., a gateway) can synchronously control multiple devices to execute multiple actions, thereby facilitating solving the problem of significant network latency of multiple devices executing multiple actions existing in the related art.

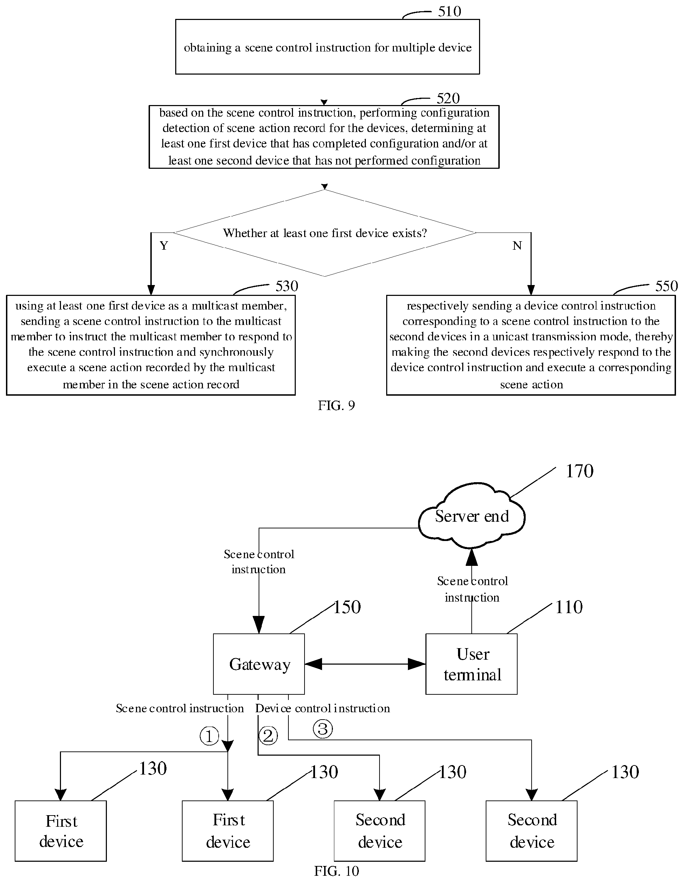

Referring to FIG. 9, an embodiment of the present disclosure provides a device control method, taking application of this method in an electronic device as an example for illustration. Among them, the electronic device can be a server end, for example, the server end can be the gateway 150 in FIG. 1, and can also be the server end 170 in FIG. 1, which does not constitute a specific limitation here.

As shown in FIG. 9, the device control method can include the following steps:

Step 510, obtaining a scene control instruction for multiple devices.

Among them, the scene control instruction is used to instruct the multiple devices to respectively execute corresponding scene actions.

In a possible implementation, the scene control instruction includes at least a scene identifier of a scene, a device identifier of at least one device, and an action identifier of a scene action correspondingly executed in the scene by at least one device.

Obtaining the scene control instruction, in a possible implementation, specifically refers to receiving a scene control instruction for multiple devices, which is is sent from the user terminal. Among them, the scene control instruction is used to indicate that a target scene constructed in the user terminal is executed, the target scene has configured corresponding scene actions for the multiple devices. **In** this method, the scene control instruction is discussed aiming at the target scene being a controlled execution scene; the scene control instruction is generated when a user executes the target scene by one-click, and are then sent by the user terminal to the gateway to make the gateway control the devices to respectively execute corresponding scene actions configured in the controlled execution scene.

Obtaining the scene control instruction, in a possible implementation, specifically refers to receiving device state data sent by the multiple devices, the device state data is used to indicate device states of the devices; according to the received device state data, if it is determined that trigger conditions in device associated data are met, a scene control instruction for the multiple devices is generated according to scene actions correspondingly executed by the multiple devices in the device associated data. **In** this method, the scene control instruction is discussed aiming at automated scenes; when trigger conditions configured in an automated scene are met, the scene control instruction is generated by the gateway, so as to make the gateway control the devices to respectively execute corresponding scene actions configured in the automated scene.

Step 520, based on the scene control instruction, performing configuration detection of scene action record for the devices, determining at least one first device that has completed configuration and/or at least one second device that has not performed configuration.

Among them, the first device is a device that has been configured with scene action record. The second device is a device that has not performed configuration. The scene action record is record of scene actions that are configured to be allowed to be executed by a device in a scene.

In a possible implementation, configuration detection of scene action record refers to determining multiple devices according to device identifiers in a scene control instruction, and then determining whether each device stores a scene identifier of a scene and an action identifier of a scene action executed by the device in the scene, thereby determining whether each device has been configured with scene action record.

For example, for each device in the multiple devices determined according to the device identifiers in the scene control instruction, that the gateway performs configuration detection of scene action record for the device includes that: the gateway sends a configuration detection request relating to scene action record to the device; the device responds to the configuration detection request and returns a corresponding request response to the gateway, wherein the request response carries a scene identifier A stored in the device and an action identifier C3 of a scene action executed by the device in the scene, thus it is determined that the device has been configured with scene action record. That is, the scene action record records that the device executes a scene action represented by the action identifier C3 in the scene represented by the scene identifier A.

A device that has completed configuration is used as a first device, and a step 530 is executed, that is, in response to a scene control instruction, a scene action recorded by the first device in the scene action record is executed.

A device that has not performed configuration is used as a second device, and a step 550 is executed, that is, in response to a device control instruction corresponding to a scene control instruction, a scene action configured by the second device in the scene is executed.

Step 530, using at least one first device as a multicast member, sending a scene control instruction to the multicast member to instruct the multicast member to respond to the scene control instruction and synchronously execute a scene action recorded by the multicast member in the scene action record.

FIG. 10 shows a schematic diagram of a gateway respectively sending different instructions to a first device and a second device. In FIG. 10, since the two first devices have completed configuration of scene action record, that is, the two second devices record scene actions correspondingly executed in the scene by them, for the two first devices, the gateway 150 essentially performs control through a scene control instruction (instruction ①) in a multicast transmission method, thereby realizing that the two first devices synchronously execute scene actions relating to themselves in the scene action record.

Step 550, respectively sending a device control instruction corresponding to a scene control instruction to the second devices in a unicast transmission mode, thereby making the second devices respectively respond to the device control instruction and execute a corresponding scene action.

As mentioned above, for the second devices, they do not store any scene's scene identifier or any action identifier of a scene action executed in a scene by the second devices. Therefore, in a possible implementation, a device control instruction is extracted from a scene control instruction and includes at least a scene identifier of a scene and an action identifier of a scene action executed in the scene by a second device, so as to instruct the second device to execute the scene action in the scene.

Continuing referring to FIG. 10, since the two second devices have not completed configuration of scene action record, that is, the two second device do not know any scene action correspondingly executed in the scene by themselves, for the two second devices, the gateway sequentially sends two device control instructions (instruction ② and instruction ③) to the second devices in a unicast transmission mode, such that the two second devices sequentially executes a scene action in the scene according to a sequence of receiving the device control instructions.

According to actual needs of network operation, in an application scene, a device control process is implemented among the user terminal, the server end, and the gateway, for example, scene control instructions are forwarded from the server end to the gateway. In another application scene, a device control process can also be implemented between the user terminal and the gateway, for example, scene control instructions are sent from the user terminal to the gateway.

Through the above process, with respect to the second devices that have not performed configuration, device control is not improved, the gateway still needs to sequentially sent multiple instructions to control the multiple second devices one by one; with respect to the first devices that have performed configuration, device control is greatly improved, that is, the gateway only needs to send one instruction, the multiple first devices can be simultaneously controlled to execute multiple actions. Thus multiple devices are avoided from sequentially executing an action in a scene, with increase of the number of the devices, it is more conducive to reduce network latency of multiple devices executing scene actions, thereby achieving effect of simultaneously and quickly controlling multiple devices, which is conducive to greatly improve users' use experience, for example, a user desires multiple devices to act uniformly to achieve effect of consistency of actions, rather than to act sequentially.

Furthermore, configuration of scene action record is not only applicable to multiple devices executing the same action, but also applicable to multiple devices executing different actions, universality of device control is effectively expanded.

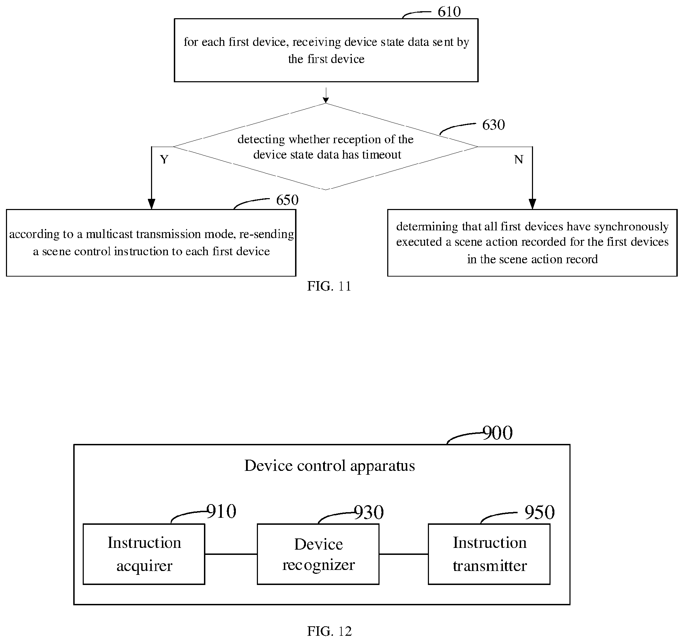

Referring to FIG. 11, in an exemplary embodiment, the device control method can further include the following steps.

Step 610, for each first device, receiving device state data sent by the first device.

Among them, the device state data is used to indicate a device state of the first device after executing a scene action. For example, a scene is a bathroom, if a smart fan executes a turning-off action, the device state data is used to indicate that a device state of the smart fan is OFF; or if a smart light executes a turning-on action, the device state data is used to indicate that a device state of the smart light is ON.

Step 630, detecting whether reception of the device state data has timeout.

Compared with the gateway, timeout of reception of the device state data is also timeout of reporting the device state data by the first devices. If it is detected that at least one first device has timeout when reporting the device state data, a step 650 is executed. On the contrary, if it is detected that no first device has timeout when reporting the device state data, it is determined that all first devices have synchronously executed a scene action recorded for the first devices in the scene action record.

Step 650, according to a multicast transmission mode, re-sending a scene control instruction to each first device.

In a possible implementation, a scene control instruction is re-sent to all first devices. In a possible implementation, a scene control instruction is re-sent to first devices having timeout when reporting the device state data, until it is determined that all first devices have synchronously executed a scene action recorded for the first devices in the scene action record. Not only can success rate of executing the scene action be ensured to the maximum extent, thereby ensuring success rate of controlling the devices, but also stability of controlling the devices is ensured sufficiently.

It should be noted that for each first device, some first devices may have already executed the scene action, and reporting of the device state data thereof has no timeout, thus these first devices can ignore a re-received device control instruction. However, for first devices which have not executed the scene action or of which reporting of the device state data has timeout, it is needed to respond the re-received device control instruction again and re-execute the scene action recorded for the first devices in the scene action record.

In the above process, detection for reporting device states is realized. Through the timeout re-sending mechanism, the first devices are enabled to receive a scene control instruction again and thereby be controlled again, in order to be capable of executing the scene action again, thereby enhancing system robustness and improving stability of controlling devices.

The following are apparatus embodiments of the present disclosure, which can be used to execute the device control methods involved by the present disclosure. For details not disclosed in the apparatus embodiments of the present disclosure, please refer to the method embodiments of the device control method involved by the present disclosure.

Referring to FIG. 12, an embodiment of the present disclosure provides a device control apparatus 900 deployed in a server end, the device control apparatus 900 includes but is not limited to an instruction acquirer 910, a device recognizer 930, and an instruction transmitter 950.

Among them, the instruction acquirer 910 is configured for obtaining a scene control instruction for multiple devices, wherein the scene control instruction is configured to instruct the multiple devices to execute corresponding scene actions respectively.

The device recognizer 930 is configured for identifying first devices in the multiple devices, wherein the first device is a device that has been configured with scene action record associated with the scene control instruction.

The instruction transmitter 950 is configured for: if at least one first device is identified, sending the scene control instruction to the first devices in a multicast transmission mode to instruct the first devices to respond to the scene control instruction and synchronously execute a scene action recorded for the first device in the scene action record.

In an exemplary embodiment, the instruction acquirer includes an instruction receiver configured for receiving the scene control instruction for the multiple devices sent by a user terminal, wherein the scene control instruction is configured for indicating that a target scene constructed in the user terminal is executed, and the target scene is configured therein with corresponding scene actions for the multiple devices.

In an exemplary embodiment, the instruction acquirer includes: a state data receiver configured for receiving device state data sent by the multiple devices, wherein the device state data is configured for indicate device states of the devices; and an instruction generator configured for: according to the received device state data, if it is determined that a trigger condition in device association data is met, generating the scene control instruction for the multiple devices according to actions executed correspondingly by the multiple devices in the device association data.

In an exemplary embodiment, the device recognizer includes a configuration detector configured for: based on the scene control instruction, performing configuration detection of scene action record for the devices and determining at least one first device that has completed configuration and/or at least one second device that has not performed configuration; the instruction transmitter includes a multicast transmitter configured for using at least one first device as a multicast member and sending the scene control instruction to the multicast member.

In an exemplary embodiment, the instruction transmitter further includes a unicast transmitter configured for: if at least one second device is identified, respectively sending a device control instruction corresponding to the scene control instruction to the second devices in a unicast transmission mode, so as to make the second devices respectively respond to the device control instruction to execute corresponding scene actions.

In an exemplary embodiment, the apparatus further includes a state data receiver configured for receiving the device state data sent by the first devices for the first devices, wherein the device state data is configured for indicating device states of the first devices after executing the scene actions; and an instruction re-transmitter configured for: if it is detected that reception of the device state data of the first devices has timeout, re-sending the scene control instruction to the first devices in a multicast transmission mode.

In an exemplary embodiment, the apparatus further includes: a configuration data receiver configured for receiving scene configuration data, wherein the scene configuration data at least indicates a scene action that is configured to be allowed to be executed by the multiple devices; and a configurator configured for requesting performing configuration of scene action record for a third device in the multiple devices according to the scene configuration data; wherein the third device is a device that supports the configuration of scene action record.

In an exemplary embodiment, the configurator includes: a device confirmer configured for determining the third device in the multiple devices based on the multiple devices indicated by the scene configuration data; a snapshot data acquirer configured for acquire snapshot configuration data associated with the determined third device from the scene configuration data, wherein the snapshot configuration data is configured for indicating a scene action that is configured to be allowed to be executed by the third device; and a snapshot data transmitter configured for sending the snapshot configuration data to the associated third device, so that the third device performs configuration of scene action record according to the snapshot configuration data; wherein in a case that the configuration of scene action record has been completed, the third device is transformed into the first device that has completed configuration.

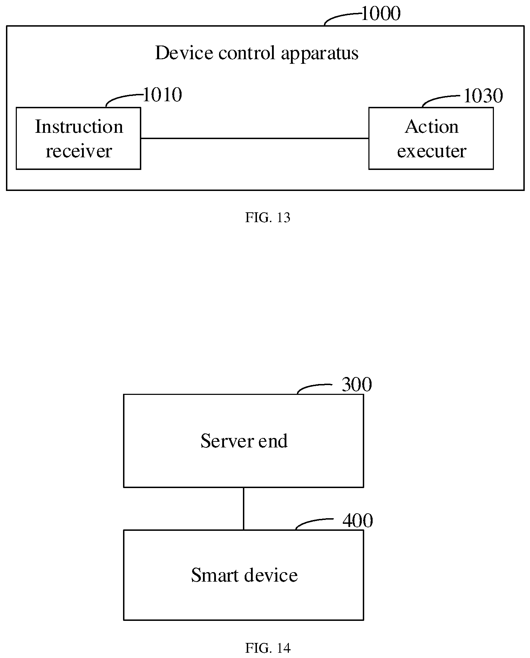

Referring to FIG. 13, an embodiment of the present disclosure provides a device control apparatus 1000 deployed in a smart device, the device control apparatus 1000 includes but is not limited to an instruction receiver 1010 and an action executer 1030.

Among them, the instruction receiver 1010 is configured for receiving a scene control instruction for multiple devices, wherein the scene control instruction is configured to instruct the multiple devices to execute corresponding scene actions respectively.

The action executer 1030 is configured for: based on configured scene action record associated with the scene control instruction, and in response to the scene control instruction, executing a scene action related to the smart device oneself in the scene action record.

Referring to FIG. 14, an embodiment of the present disclosure provides a device control system, the system includes but is not limited to a server end 300 and a smart device 400.

Among them, the server end 300 is configured for: obtaining a scene control instruction for multiple smart devices, and in a case that at least one first device is identified in the multiple smart devices, sending the scene control instruction to the first devices in a multicast transmission mode; wherein the scene control instruction is used to instruct the smart devices to respectively corresponding scene actions, and the first devices are smart devices that have been configured with scene action record.

The smart device 400 is configured for: in response to a received scene control instruction, based on configured scene action record, executing a scene action relating to itself in the scene action record.

It should be noted that the device control device or system provided by the above embodiments are only illustrated with examples according to the division of the above functional modules when performing device control. In practical applications, the above functions can be assigned to be completed by different functional modules as needed, that is, the internal structure of the device control device or system will be divided into different functional modules to complete all or some of the functions described above.

In addition, the device control device or system provided by the above embodiments belongs to the same concept as the embodiments of the device control method, and the specific ways in which each module performs operations have been described in detail in the method embodiments, which will not be repeated here.

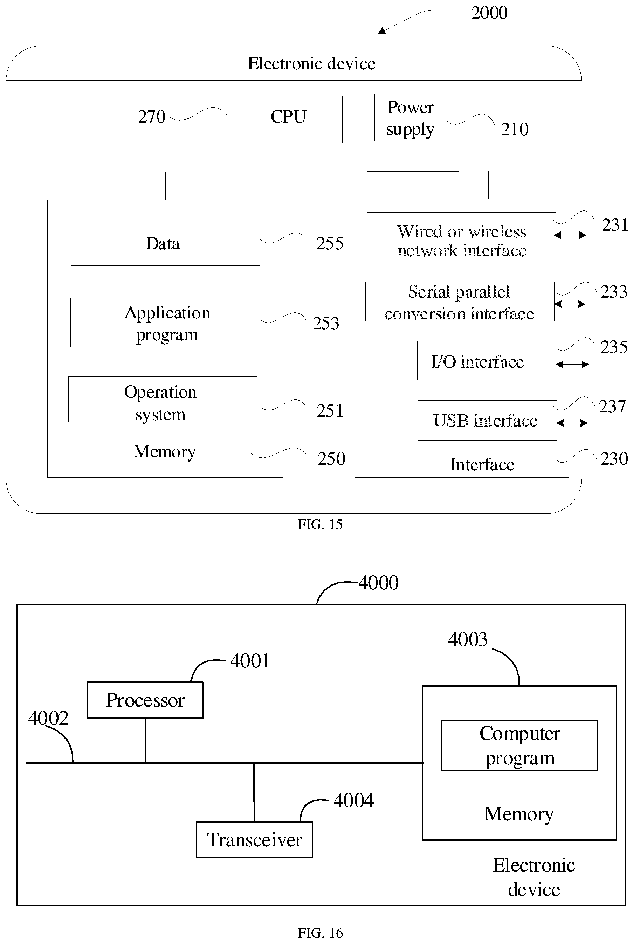

FIG. 15 is a structural schematic diagram of an electronic device shown according to an exemplary embodiment. The electronic device is applicable to the smart device 130, the gateway 150, and the server end 170 in the implementation environment shown in FIG. 1.

It should be noted that this electronic device is only an example adapted to the present disclosure and cannot be considered as providing any limitation to the use scope of the present disclosure. The electronic device cannot be interpreted as requiring relying on or necessarily having one or more components of the exemplary electronic device 2000 shown in FIG. 29.

The hardware structure of the electronic device 2000 may vary greatly due to differences in configuration or performance, as shown in FIG. 15, the electronic device 2000 includes a power supply 210, an interface 230, at least one memory 250, and at least one central processing unit (CPU) 270.

Specifcially, the power supply 210 is used to provide working voltages for the various hardware electronic devices of the electronic device 2000.

The interface 230 includes at least one wired or wireless network interface 231 used to interact with external electronic devices, for example, perform interaction between the user terminal 110 and the gateway 150 in the implementation environment shown in FIG. 1.

Of course, in other examples adapted to the present disclosure, the interface 230 may also further include at least one serial-parallel conversion interface 233, at least one input/output interface 235, at least one USB interface 237, and so on, as shown in FIG. 15, which does not constitute a specific limitation here.

The memory 250, as a carrier for resource storage, can be a read-only memory, a random access memory, a magnetic disk, or optical disk, etc. The resources stored thereon include an operating system 251, an application programs 253, and data 255, and the storage method can be temporarily storing or permanently storing.

Among them, the operating system 251 is used to manage and control the various hardware electronic devices and the application program 253 of the electronic device 2000, so as to enable the CPU 270 to perform calculation and processing for the mass data 255 in the memory 250. It can be Windows ServerTM, Mac OS XTM, UnixTM, LinuxTM, FreeBSDTM, etc.

The application program 253 is a computer-readable instruction to complete at least one specific work based on the operating system 251, which can include at least one module (not shown in FIG. 15), and each module can respectively contain computer-readable instructions for the electronic device 2000. For example, an electronic device control apparatus can be regarded as an application program 253 deployed in the electronic device 2000.

The data 255 can be photos, images, and the like stored in a magnetic disk, and can also be device state data, scene configuration data, and the like stored in the memory 250.

The CPU 270 may include one or more processors and be configured to communicate with the memory 250 through at least one communication bus to read computer readable instructions stored in the memory 250, thereby implementing calculation and processing for the mass data 255 in the memory 250. For example, the electronic device control method is achieved in the manner of reading a series of computer readable instructions stored in the memory 250 using the CPU 270.

In addition, the present disclosure can also be implemented through hardware circuits or a combination of hardware circuits and software. Therefore, the implementation of the present disclosure is not limited to any specific hardware circuit, software, or combination of the two.

Referring to FIG. 16, an embodiment of the present disclosure provides an electronic device 4000, the electronic device 4000 can include a smart device, a gateway, a server, and so on.

In FIG. 16, the electronic device 4000 includes at least one processor 4001, at least one communication bus 4002, and at least one memory 4003.

Among them, data interaction between the processor 4001 and the memory 4003 can be implemented through at least one communication bus 4002. The communication bus 4002 may include a path for transmitting data between the processor 4001 and the memory 4003. The communication bus 4002 can be a PCI (Peripheral Component Interconnect) bus or an EISA (Extended Industry Standard Architecture) bus, etc. The communication bus 4002 can be divided into an address bus, a data bus, a control bus, etc. For ease of representation, only one thick line is used for representation in FIG. 16, but it does not indicate that there is only one bus or one type of bus.

Optionally, the electronic device 4000 may also include a transceiver 4004, the transceiver 4004 can be used for data interaction between the device and other devices, such as sending data and/or receiving data. It should be noted that in practical applications, the transceiver 4004 is not limited to one, and the structure of the electronic device 4000 does not constitute a limitation to the embodiments of the present disclosure.

The processor 4001 can be a CPU (Central Processing Unit), a general-purpose processor, a DSP (Digital Signal Processor), an ASIC (Application Specific Integrated Circuit), a FPGA (Field Programmable Gate Array) or other programmable logic devices, a transistor logic device, a hardware component, or any combination thereof. It can implement or execute various exemplary logical blocks, modules, and circuits described in conjunction with the disclosed content of the present disclosure. The processor 4001 can also be a combination that implements computing functions, such as a combination containing one or more microprocessors, a combination of a DSP and microprocessors, etc.

The memory 4003 can be ROM (Read Only Memory) or other types of static storage devices that can store static information and instructions, RAM (Random Access Memory) or other types of dynamic storage devices that can store information and instructions, as well as EEPROM (Electrically Erasable Programmable Read Only Memory), CD-ROM (Compact Disk Read Only Memory) or other optical disk storage, optical disc storage (including compressed optical discs, laser discs, optical discs, digital versatile discs, Blu-ray discs, etc.), magnetic disk storage media or other magnetic storage devices, or any other medium that can be used to carry or store desired computer readable instructions in the form of instructions or data structures and can be accessed by the electronic device 4000, but is not limited to these.

The memory 4003 stores computer readable instructions, the processor 4001 can read the computer readable instructions stored in the memory 4003 through the communication bus 4002.

The computer readable instructions, when being executed by the processor 4001, implements the device control methods in the above embodiments.

Additionally, an embodiment of the present disclosure provides a storage medium, the storage medium stores computer readable instructions, and the computer readable instructions are loaded and executed by a processor to implement the aforesaid device control methods.

An embodiment of the present disclosure provides a computer program product, the computer program product includes computer readable instructions, the computer readable instructions are stored in a storage medium, a processor of a device reads the computer readable instructions from the storage medium, and loads and executes the computer readable instructions to make the device implement the aforesaid device control methods. Among them, the computer program product can use any programming language and take the form of source codes, object codes, or intermediate codes between source codes and object codes, such as partially compiled form or any other required form.

Compared with the related art, a scene action executed correspondingly by at least one device in a scene is recorded by the way of scene action record and configured for at least device in the scene; thus, during a device control process, a scene control instruction is sent to the devices in a multicast transmission mode, the devices can simultaneously execute a corresponding scene action according to scene actions recorded for the devices in the configured scene action record, thereby avoiding controlling multiple devices one by one based on multiple instruction, that is, avoiding multiple devices from sequentially executing corresponding scene actions. Thus, network latency of multiple devices executing multiple actions is reduced, such that the problem of large network latency of multiple devices executing multiple actions existing in the related art can be effectively solved.

## Claims

1. A device control method executed by a server end, wherein the method comprises:
obtaining (310) a scene control instruction for multiple devices based on a constructed scene for the multiple devices, wherein the scene control instruction is configured to instruct each of the devices to execute a corresponding scene action in the constructed scene; wherein the constructed scene is constructed by respectively configuring scene actions for the multiple devices;
identifying (330) , based on the scene control instruction and by performing configuration detection of scene action records on the devices, a first device and/or a second device among the devices, wherein the first device is a device that supports configuration of a scene action record and has been configured with the scene action record; wherein the second device is a device that does not support configuration of a scene action record; wherein the scene action record is configured for the first device according to scene configuration data, and is a record of a scene action that the first device is configured and allowed to execute in the constructed scene; wherein the scene configuration data is generated when a scene for the multiple devices is constructed in a user terminal;
if at least one first device is identified, sending (350) the scene control instruction to the first devices in a multicast transmission mode to instruct the first devices to respond to the scene control instruction and synchronously execute a scene action recorded for the first devices in the scene action record; and/or if at least one second device is identified, respectively sending (550) a device control instructions corresponding to the scene control instruction to the second devices in a unicast transmission mode, thereby making the second devices respectively respond to the device control instruction and execute a corresponding scene action.

2. The method according to claim 1, wherein the obtaining (310) a scene control instruction for multiple devices based on a constructed scene for the multiple devices comprises:
receiving a scene control instruction for the multiple devices sent by a user terminal, wherein the scene control instruction is configured to indicate that a target scene constructed in the user terminal is to be executed, and the target scene is configured with corresponding scene actions for the multiple devices.

3. The method according to claim 1 or 2, wherein the obtaining (310) a scene control instruction for multiple devices based on a constructed scene for the multiple devices comprises:
receiving device state data sent by the multiple devices, wherein the device state data is configured to indicate device states of the devices;
determining, based on the received device state data, whether trigger conditions defined in device associated data associated with the multiple devices are met; and if it is determined that trigger conditions are met, generating the scene control instruction for controlling the multiple devices according to scene actions correspondingly executed by the multiple devices in the device associated data.

4. The method according to any one of claims 1-3, wherein identifying (330) . based on the scene control instruction and by performing configuration detection of scene action records on the devices, a first device and/or a second device among the devices comprises:
based on the scene control instruction, performing (520) configuration detection of scene action record for the devices, determining at least one first device that has completed configuration and/or at least one second device that has not performed configuration;
the sending (310) the scene control instruction to the first devices in a multicast transmission mode comprises:
using (530) at least one first device as a multicast member, sending the scene control instruction to the multicast member.

5. The method according to claim 4, wherein the performing (520) configuration detection of scene action record for the devices comprises:
determining multiple devices according to device identifiers in a scene control instruction, and then determining whether each device stores a scene identifier of a scene and an action identifier of a scene action executed by the device in the scene, thereby determining whether each device has been configured with scene action record.

6. The method according to any one of claims 1-5, after the sending (350) the scene control instruction to the first devices in a multicast transmission mode, further comprising:
for each first device, receiving (610) device state data sent by the first device, wherein the device state data is configured to indicate a device state of the first device after executing the scene action;
if it is detected that reception of the device state data of the first device has timeout (630), re-sending (650) the scene control instruction to the first devices in the multicast trasmission mode.

7. The method according to any one of claims 1-6, further comprising:
receiving (410) scene configuration data, wherein the scene configuration data indicates at least scene actions which are configured to be allowed to be executed by the multiple devices;
based on the scene configuration data, requesting (430) performing configuration of scene action record for a third device in the multiple devices, wherein the third device is a device that supports the configuration of scene action record.

8. The method according to claim 7, wherein the scene configuration data comprises a scene identifier of a scene, a device identifier of at least one device, and an action identifier of a scene action corresponding to a device.

9. The method according to claim 7 or 8, wherein the based on the scene configuration data, requesting (430) performing configuration of scene action record for the third device in the multiple devices comprises:
based on multiple devices indicated by the scene configuration data, determining (431) the third device in the multiple devices;
obtaining (433) snapshot configuration data associated with the determined third device from the scene configuration data, wherein the snapshot configuration data is configured to indicate a scene action that is configured to be allowed to be executed by the third device;
sending (435) the snapshot configuration data to the associated third device, making the third device performing configuration of scene action record according to the snapshot configuration data, wherein the third device is transformed into the first device that has completed configuration in a case that the configuration of scene action record is completed.

10. The method according to claim 9, wherein the snapshot configuration data comprises a device identifier of at least one third device, and an action identifier corresponding to a scene action of the third device.

11. A device control apparatus (900) deployed in a server end, wherein the apparatus (900) comprises:
an instruction aquirer (910) configured for obtaining a scene control instruction for multiple devices based on a constructed scene for the multiple devices, wherein the scene control instruction is configured to instruct each of the devices to execute a corresponding scene action in the constructed scene; wherein the constructed scene is constructed by respectively configuring scene actions for the multiple devices;
a device recognizer (930) configured for identifying, based on the scene control instruction and by performing configuration detection of scene action records on the devices, a first device and/or a second device among the devices, wherein the first devices are devices that supports configuration of a scene action record and has been configured with the scene action record; wherein the second device is a device that does not support configuration of a scene action record; wherein the scene action record is configured for the first device according to scene configuration data, and is a record of a scene action that the first device is configured and allowed to execute in the constructed scene; wherein the scene configuration data is generated when a scene for the multiple devices is constructed in a user terminal; and
an instruction transmitter (950) configured for: if at least one first device is identified, sending the scene control instruction to the first devices in a multicast transmission mode to instruct the first devices to respond to the scene control instruction and synchronously execute a scene action recorded for the first devices in the scene action record; and/or if at least one second device is identified, respectively sending a device control instructions corresponding to the scene control instruction to the second devices in a unicast transmission mode, thereby making the second devices respectively respond to the device control instruction and execute a corresponding scene action.

12. A device control system, wherein the system comprises:
a server end (300) configured for obtaining a scene control instruction for multiple smart devices based on a constructed scene for the multiple devices, and in a case that at least one first device and/or one second device is identified in the smart devices, sending the scene control instruction to the first device in a multicast transmission mode, wherein the scene control instruction is configured for instructing the smart devices to execute corresponding scene actions respectively; wherein the first device is a smart device that has been configured with scene action record; and/or sending a device control instructions corresponding to the scene control instruction to the second devices in a unicast transmission mode, thereby making the second devices respectively respond to the device control instruction and execute a corresponding scene action; wherein the constructed scene is constructed by respectively configuring scene actions for the multiple devices; wherein the first device is a device that supports configuration of a scene action record and has been configured with the scene action record; wherein the second device is a device that does not support configuration of a scene action record; and
smart devices (400) configured for: in response to the received scene control instruction, and based on the configured scene action record, executing scene actions related to themselves in the scene action record.

13. An electronic device (4000) comprising at least one processor (4001) and at least one memory (4003), wherein the memory (4003) stores computer readable instructions, and the computer readable instructions are executed by the one or more processors (4001) to make the electronic device (4000) implement the device control method according to any one of claims 1-10.

14. A storage medium storing computer readable instructions, wherein the computer readable instructions are executed by one or more processors to implement the device control method according to any one of claims 1-10.

## Patentansprüche

1. Verfahren zur Steuerung einer Vorrichtung, das serverseitig ausgeführt wird, wobei das Verfahren umfasst:
Erhalten (310) einer Szenensteuerungsanweisung für mehrere Vorrichtungen basierend auf einer für die mehreren Vorrichtungen erstellten Szene, wobei die Szenensteuerungsanweisung dazu konfiguriert ist, jede der Vorrichtungen anzuweisen, eine entsprechende Szenenaktion in der erstellten Szene auszuführen; wobei die erstellte Szene durch jeweiliges Konfigurieren von Szenenaktionen für die mehreren Vorrichtungen erstellt wird;
Identifizieren (330) einer ersten Vorrichtung und/oder einer zweiten Vorrichtung aus den Vorrichtungen, basierend auf der Szenensteuerungsanweisung und durch Durchführen einer Konfigurationserfassung von Szenenaktionsdatensätzen auf den Vorrichtungen, wobei die erste Vorrichtung eine Vorrichtung ist, die eine Konfiguration eines Szenenaktionsdatensatzes unterstützt und mit dem Szenenaktionsdatensatz konfiguriert ist; wobei die zweite Vorrichtung eine Vorrichtung ist, die eine Konfiguration eines Szenenaktionsdatensatzes nicht unterstützt; wobei der Szenenaktionsdatensatz für die erste Vorrichtung gemäß den Szenenkonfigurationsdaten konfiguriert ist und ein Datensatz einer Szenenaktion ist, zu deren Ausführung die erste Vorrichtung in der erstellten Szene konfiguriert und zulässig ist; wobei die Szenenkonfigurationsdaten erzeugt werden, wenn eine Szene für die mehreren Vorrichtungen in einem Benutzerendgerät erstellt wird;
falls mindestens eine erste Vorrichtung identifiziert wird, Senden (350) der Szenensteuerungsanweisung an die ersten Vorrichtungen im Multicast-Übertragungsmodus, um die ersten Vorrichtungen anzuweisen, auf die Szenensteuerungsanweisung zu antworten und synchron eine Szenenaktion auszuführen, die für die ersten Vorrichtungen im Szenenaktionsdatensatz aufgezeichnet ist; und/oder falls mindestens eine zweite Vorrichtung identifiziert wird, jeweils Senden (550) einer der Szenensteuerungsanweisung entsprechenden Vorrichtungssteuerungsanweisung an die zweiten Vorrichtungen im Unicast-Übertragungsmodus, um dadurch zu bewirken, dass die zweiten Vorrichtungen jeweils auf die Vorrichtungssteuerungsanweisung antworten und eine entsprechende Szenenaktion ausführen.

2. Verfahren nach Anspruch 1, wobei das Erhalten (310) einer Szenensteuerungsanweisung für mehrere Vorrichtungen basierend auf einer für die mehreren Vorrichtungen erstellten Szene das Folgende umfasst:
Empfangen einer von einem Benutzerendgerät gesendeten Szenensteuerungsanweisung für die mehreren Vorrichtungen, wobei die Szenensteuerungsanweisung dazu konfiguriert ist, das Ausführen einer im Benutzerendgerät erstellten Zielszene anzugeben, und die Zielszene mit entsprechenden Szenenaktionen für die mehreren Vorrichtungen konfiguriert ist.

3. Verfahren nach Anspruch 1 oder 2, wobei das Erhalten (310) einer Szenensteuerungsanweisung für mehrere Vorrichtungen basierend auf einer für die mehreren Vorrichtungen erstellten Szene das Folgende umfasst:
Empfangen der von den mehreren Vorrichtungen gesendeten Vorrichtungszustandsdaten, wobei die Vorrichtungszustandsdaten dazu konfiguriert sind, die Vorrichtungszustände der Vorrichtungen anzugeben;
Bestimmen, basierend auf den empfangenen Vorrichtungszustandsdaten, ob die in den mehreren Vorrichtungen zugeordneten vorrichtungsbezogenen Daten definierten Auslösebedingungen erfüllt sind; und falls bestimmt wird, dass die Auslösebedingungen erfüllt sind, Erzeugen der Szenensteuerungsanweisung zum Steuern der mehreren Vorrichtungen gemäß den von den mehreren Vorrichtungen entsprechend ausgeführten Szenenaktionen in den vorrichtungsbezogenen Daten.

4. Verfahren nach einem der Ansprüche 1 bis 3, wobei das Identifizieren (330) einer ersten Vorrichtung und/oder einer zweiten Vorrichtung aus den Vorrichtungen, basierend auf der Szenensteuerungsanweisung und durch Durchführen einer Konfigurationserfassung von Szenenaktionsdatensätzen auf den Vorrichtungen, das Folgende umfasst:
basierend auf der Szenensteuerungsanweisung, Durchführen (520) einer Konfigurationserfassung von Szenenaktionsdatensätzen für die Vorrichtungen; Bestimmen mindestens einer ersten Vorrichtung, die die Konfiguration abgeschlossen hat, und/oder mindestens einer zweiten Vorrichtung, die die Konfiguration nicht durchgeführt hat;
wobei das Senden (350) der Szenensteuerungsanweisung an die ersten Vorrichtungen in einem Multicast-Übertragungsmodus das Folgende umfasst:
Verwenden (530) mindestens einer ersten Vorrichtung als Multicast-Mitglied; Senden der Szenensteuerungsanweisung an das Multicast-Mitglied.

5. Verfahren nach Anspruch 4, wobei das Durchführen (520) einer Konfigurationserfassung des Szenenaktionsdatensatzes für die Vorrichtungen das Folgende umfasst:
Bestimmen mehrerer Vorrichtungen gemäß Vorrichtungsidentifikatoren in einer Szenensteuerungsanweisung und dann Bestimmen, ob jede Vorrichtung einen Szenenidentifikator einer Szene und einen Aktionsidentifikator einer durch die Vorrichtung in der Szene ausgeführten Szenenaktion speichert, um dadurch zu bestimmen, ob jede Vorrichtung mit einem Szenenaktionsdatensatz konfiguriert wurde.

6. Verfahren nach einem der Ansprüche 1 bis 5, das nach dem Senden (350) der Szenensteuerungsanweisung an die ersten Vorrichtungen in einem Multicast-Übertragungsmodus ferner umfasst:
für jede erste Vorrichtung, Empfangen (610) von durch die erste Vorrichtung gesendeten Vorrichtungszustandsdaten, wobei die Vorrichtungszustandsdaten dazu konfiguriert sind, einen Vorrichtungszustand der ersten Vorrichtung nach dem Ausführen der Szenenaktion anzugeben;
falls erkannt wird, dass der Empfang der Vorrichtungszustandsdaten der ersten Vorrichtung eine Zeitüberschreitung aufweist (630), erneutes Senden (650) der Szenensteuerungsanweisung an die ersten Vorrichtungen im Multicast-Übertragungsmodus.

7. Verfahren nach einem der Ansprüche 1 bis 6, ferner umfassend:
Empfangen (410) von Szenenkonfigurationsdaten, wobei die Szenenkonfigurationsdaten mindestens Szenenaktionen angeben, zu deren Ausführung durch die mehreren Vorrichtungen diese als zulässig konfiguriert sind;
basierend auf den Szenenkonfigurationsdaten, Anfordern (430) des Durchführens einer Konfiguration des Szenenaktionsdatensatzes für eine dritte Vorrichtung aus den mehreren Vorrichtungen, wobei die dritte Vorrichtung eine Vorrichtung ist, die die Konfiguration des Szenenaktionsdatensatzes unterstützt.

8. Verfahren nach Anspruch 7, wobei die Szenenkonfigurationsdaten einen Szenenidentifikator einer Szene, einen Vorrichtungsidentifikator mindestens einer Vorrichtung und einen Aktionsidentifikator einer einer Vorrichtung entsprechenden Szenenaktion umfassen.

9. Verfahren nach Anspruch 7 oder 8, wobei basierend auf den Szenenkonfigurationsdaten, das Anfordern (430) des Durchführens einer Konfiguration des Szenenaktionsdatensatzes für die dritte Vorrichtung aus den mehreren Vorrichtungen das Folgende umfasst:
basierend auf mehreren durch die Szenenkonfigurationsdaten angegebenen Vorrichtungen, Bestimmen (431) der dritten Vorrichtung aus den mehreren Vorrichtungen;
Erhalten (433) von der bestimmten dritten Vorrichtung zugeordneten Schnappschusskonfigurationsdaten aus den Szenenkonfigurationsdaten, wobei die Schnappschusskonfigurationsdaten dazu konfiguriert sind, eine Szenenaktion anzugeben, zu deren Ausführung durch die dritte Vorrichtung diese als zulässig konfiguriert ist;
Senden (435) der Schnappschusskonfigurationsdaten an die zugeordnete dritte Vorrichtung, wodurch die dritte Vorrichtung die Konfiguration eines Szenenaktionsdatensatzes gemäß den Schnappschusskonfigurationsdaten durchführt, wobei die dritte Vorrichtung in die erste Vorrichtung transformiert wird, deren Konfiguration abgeschlossen ist, falls die Konfiguration des Szenenaktionsdatensatzes abgeschlossen ist.

10. Verfahren nach Anspruch 9, wobei die Schnappschusskonfigurationsdaten einen Vorrichtungsidentifikator von mindestens einer dritten Vorrichtung, und einen Aktionsidentifikator entsprechend einer Szenenaktion der dritten Vorrichtung umfassen.

11. Einrichtung (900) zur Steuerung einer Vorrichtung, die serverseitig eingesetzt wird, wobei die Einrichtung (900) das Folgende umfasst:
einen Anweisungserfasser (910), konfiguriert zum Erhalten einer Szenensteuerungsanweisung für mehrere Vorrichtungen basierend auf einer für die mehreren Vorrichtungen erstellten Szene, wobei die Szenensteuerungsanweisung dazu konfiguriert ist, jede der Vorrichtungen anzuweisen, eine entsprechende Szenenaktion in der erstellten Szene auszuführen; wobei die erstellte Szene durch jeweiliges Konfigurieren von Szenenaktionen für die mehreren Vorrichtungen erstellt wird;
einen Vorrichtungserkenner (930), konfiguriert zum Identifizieren einer ersten Vorrichtung und/oder einer zweiten Vorrichtung aus den Vorrichtungen, basierend auf der Szenensteuerungsanweisung und durch Durchführen einer Konfigurationserfassung von Szenenaktionsdatensätzen auf den Vorrichtungen, wobei die erste Vorrichtung eine Vorrichtung ist, die eine Konfiguration eines Szenenaktionsdatensatzes unterstützt und mit dem Szenenaktionsdatensatz konfiguriert ist; wobei die zweite Vorrichtung eine Vorrichtung ist, die eine Konfiguration eines Szenenaktionsdatensatzes nicht unterstützt; wobei der Szenenaktionsdatensatz für die erste Vorrichtung gemäß den Szenenkonfigurationsdaten konfiguriert ist und ein Datensatz einer Szenenaktion ist, zu deren Ausführung die erste Vorrichtung in der erstellten Szene konfiguriert und zulässig ist; wobei die Szenenkonfigurationsdaten erzeugt werden, wenn eine Szene für die mehreren Vorrichtungen in einem Benutzerendgerät erstellt wird;
einen Anweisungstransmitter (950), konfiguriert zum: falls mindestens eine erste Vorrichtung identifiziert wird, Senden der Szenensteuerungsanweisung an die ersten Vorrichtungen im Multicast-Übertragungsmodus, um die ersten Vorrichtungen anzuweisen, auf die Szenensteuerungsanweisung zu antworten und synchron eine Szenenaktion auszuführen, die für die ersten Vorrichtungen im Szenenaktionsdatensatz aufgezeichnet ist; und/oder falls mindestens eine zweite Vorrichtung identifiziert wird, jeweils Senden einer der Szenensteuerungsanweisung entsprechenden Vorrichtungssteuerungsanweisung an die zweiten Vorrichtungen im Unicast-Übertragungsmodus, um dadurch zu bewirken, dass die zweiten Vorrichtungen jeweils auf die Vorrichtungssteuerungsanweisung antworten und eine entsprechende Szenenaktion ausführen.

12. System zur Steuerung einer Vorrichtung, umfassend:
eine Serverseite (300), konfiguriert zum Erhalten einer Szenensteuerungsanweisung für mehrere intelligente Vorrichtungen basierend auf einer für die mehreren Vorrichtungen erstellten Szene und in einem Fall, dass mindestens eine erste Vorrichtung und/oder eine zweite Vorrichtung aus den intelligenten Vorrichtungen identifiziert wird, die Szenensteuerungsanweisung im Multicast-Übertragungsmodus an die erste Vorrichtung zu senden, wobei die Szenensteuerungsanweisung dazu konfiguriert ist, dass die intelligenten Vorrichtungen angewiesen werden, jeweils entsprechende Szenenaktionen auszuführen; wobei die erste Vorrichtung eine intelligente Vorrichtung ist, die mit einem Szenenaktionsdatensatz konfiguriert wurde; und/oder eine der Szenensteuerungsanweisung entsprechende Vorrichtungssteuerungsanweisung im Unicast-Übertragungsmodus an die zweiten Vorrichtungen zu senden, wodurch die zweiten Vorrichtungen jeweils auf die Vorrichtungssteuerungsanweisung antworten und eine entsprechende Szenenaktion ausführen; wobei die erstellte Szene durch jeweiliges Konfigurieren von Szenenaktionen für die mehreren Vorrichtungen erstellt wird; wobei die erste Vorrichtung eine Vorrichtung ist, die die Konfiguration eines Szenenaktionsdatensatzes unterstützt und mit dem Szenenaktionsdatensatz konfiguriert wurde; wobei die zweite Vorrichtung eine Vorrichtung ist, die die Konfiguration eines Szenenaktionsdatensatzes nicht unterstützt; und
intelligente Vorrichtungen (400), konfiguriert zum Ausführen von auf sich selbst bezogenen Szenenaktionen in dem Szenenaktionsdatensatz als Antwort auf die empfangene Szenensteuerungsanweisung und basierend auf dem konfigurierten Szenenaktionsdatensatz.

13. Elektronische Vorrichtung (4000), umfassend mindestens einen Prozessor (4001) und mindestens einen Speicher (4003), wobei der Speicher (4003) computerlesbare Anweisungen speichert und die computerlesbaren Anweisungen von dem einen oder den mehreren Prozessoren (4001) ausgeführt werden, um zu bewirken, dass die elektronische Vorrichtung (4000) das Verfahren zur Steuerung der Vorrichtung nach einem der Ansprüche 1 bis 10 realisiert.

14. Aufzeichnungsmedium zum Speichern von computerlesbaren Anweisungen, wobei die computerlesbaren Anweisungen von einem oder mehreren Prozessoren ausgeführt werden, um das Verfahren zur Steuerung der Vorrichtung nach einem der Ansprüche 1 bis 10 zu realisieren.

## Revendications

1. Procédé de commande de dispositif exécuté par un terminal serveur, dans lequel le procédé comprend :
l'obtention (310) d'une instruction de commande de scénario pour de multiples dispositifs sur la base d'un scénario construit pour les dispositifs, dans lequel l'instruction de commande de scénario est configurée pour ordonner à chacun des dispositifs d'exécuter une action de scénario correspondante dans le scénario construit ; dans lequel le scénario construit est construit en configurant respectivement des actions de scénario pour les multiples dispositifs ;
l'identification (330), sur la base de l'instruction de commande de scénario et en réalisant la détection de configuration d'enregistrements d'action de scénario sur les dispositifs, d'un premier dispositif et/ou d'un deuxième dispositif parmi les dispositifs, dans lequel le premier dispositif est un dispositif qui prend en charge la configuration d'un enregistrement d'action de scénario et a été configuré avec l'enregistrement d'action de scénario ; dans lequel le deuxième dispositif est un dispositif qui ne prend pas en charge la configuration d'un enregistrement d'action de scénario ; dans lequel l'enregistrement d'action de scénario est configuré pour le premier dispositif selon des données de configuration de scénario, et est un enregistrement d'une action de scénario que le premier dispositif est configuré et autorisé à exécuter dans le scénario construit ; dans lequel les données de configuration de scénario sont générées lorsqu'un scénario pour les multiples dispositifs est construit sur un terminal utilisateur ;
si au moins un premier dispositif est identifié, l'envoi (350) de l'instruction de commande de scénario aux premiers dispositifs dans un mode de transmission multidiffusion afin d'ordonner aux premiers dispositifs de répondre à l'instruction de commande de scénario et d'exécuter de manière synchrone une action de scénario enregistrée pour les premiers dispositifs dans l'enregistrement d'action de scénario ; et/ou si au moins un deuxième dispositif est identifié, l'envoi (550) respectif d'une instruction de commande de dispositif correspondant à l'instruction de commande de scénario aux deuxièmes dispositifs dans un mode de transmission monodiffusion, ce qui permet aux deuxièmes dispositifs de répondre respectivement à l'instruction de commande de dispositif et d'exécuter une action de scénario correspondante.

2. Procédé selon la revendication 1, dans lequel l'obtention (310) d'une instruction de commande de scénario pour de multiples dispositifs sur la base d'un scénario construit pour les dispositifs comprend :
la réception d'une instruction de commande de scénario pour les multiples dispositifs envoyée par un terminal utilisateur, dans lequel l'instruction de commande de scénario est configurée pour indiquer qu'un scénario cible construit sur le terminal utilisateur doit être exécuté, le scénario cible est configuré avec des actions de scénario correspondantes pour les multiples dispositifs.

3. Procédé selon la revendication 1 ou 2, dans lequel l'obtention (310) d'une instruction de commande de scénario pour de multiples dispositifs sur la base d'un scénario construit pour les dispositifs comprend :
la réception de données d'état de dispositif envoyées par les multiples dispositifs, dans lequel les données d'état de dispositif sont configurées pour indiquer des états de dispositif des dispositifs ;
la détermination, sur la base des données d'état de dispositif reçues, du fait que des conditions de déclenchement définies dans des données associées au dispositif associées aux multiples dispositifs sont remplies ; et, s'il est déterminé que des conditions de déclenchement sont remplies, la génération de l'instruction de commande de scénario destinée à commander les multiples dispositifs selon des actions de scénario exécutées en conséquence par les multiples dispositifs dans les données associées au dispositif.

4. Procédé selon l'une quelconque des revendications 1 à 3, dans lequel l'identification (330), sur la base de l'instruction de commande de scénario et en réalisant la détection de configuration d'enregistrements d'action de scénario sur les dispositifs, d'un premier dispositif et/ou d'un deuxième dispositif parmi les dispositifs comprend :
sur la base de l'instruction de commande de scénario, la réalisation (520) de la détection de configuration d'un enregistrement d'action de scénario pour les dispositifs, la détermination d'au moins un premier dispositif qui a terminé la configuration et/ou d'au moins un deuxième dispositif qui n'a pas réalisé la configuration ;
l'envoi (350) de l'instruction de commande de scénario aux premiers dispositifs dans un mode de transmission multidiffusion comprend :
l'utilisation (530) d'au moins un premier dispositif en tant qu'élément de multidiffusion, l'envoi de l'instruction de commande de scénario à l'élément de multidiffusion.

5. Procédé selon la revendication 4, dans lequel la réalisation (520) de la détection de configuration d'un enregistrement d'action de scénario pour les dispositifs comprend :
la détermination de multiples dispositifs selon des identifiants de dispositif dans une instruction de commande de scénario, puis la détermination du fait que chaque dispositif stocke un identifiant de scénario d'un scénario et un identifiant d'action d'une action de scénario exécutée par le dispositif dans le scénario, déterminant ainsi du fait que chaque dispositif a été configuré avec un enregistrement d'action de scénario.

6. Procédé selon l'une quelconque des revendications 1 à 5, après l'envoi (350) de l'instruction de commande de scénario aux premiers dispositifs dans un mode de transmission multidiffusion, comprenant en outre :
pour chaque premier dispositif, la réception (610) de données d'état de dispositif envoyées par le premier dispositif, dans lequel les données d'état de dispositif sont configurées pour indiquer un état de dispositif du premier dispositif après exécution de l'action de scénario ;
s'il est détecté que la réception des données d'état de dispositif du premier dispositif a expiré (630), la ré-envoie (650) de l'instruction de commande de scénario aux premiers dispositifs dans le mode de transmission multidiffusion.

7. Procédé selon l'une quelconque des revendications 1 à 6, comprenant en outre :
la réception (410) de données de configuration de scénario, dans lequel les données de configuration de scénario indiquent au moins des actions de scénario qui sont configurées pour pouvoir être exécutées par les multiples dispositifs ;
sur la base des données de configuration de scénario, la demande (430) de la réalisation de la configuration d'un enregistrement d'action de scénario pour un troisième dispositif parmi les multiples dispositifs, dans lequel le troisième dispositif est un dispositif qui prend en charge la configuration d'un enregistrement d'action de scénario.

8. Procédé selon la revendication 7, dans lequel les données de configuration de scénario comprennent un identifiant de scénario d'un scénario, un identifiant d'au moins un dispositif, et un identifiant d'action d'une action de scénario correspondant à un dispositif.

9. Procédé selon la revendication 7 ou 8, dans lequel, sur la base des données de configuration de scénario, la demande (430) de la réalisation de la configuration d'un enregistrement d'action de scénario pour le troisième dispositif parmi les multiples dispositifs comprend :
sur la base de multiples dispositifs indiqués par les données de configuration de scénario, la détermination (431) du troisième dispositif parmi les multiples dispositifs ;
l'obtention (433) de données de configuration d'instantané associées au troisième dispositif déterminé à partir des données de configuration de scénario, dans lequel les données de configuration d'instantané sont configurées pour indiquer une action de scénario qui est configurée pour pouvoir être exécutée par le troisième dispositif ;
l'envoi (435) des données de configuration d'instantané au troisième dispositif associé, amenant le troisième dispositif à réaliser la configuration d'un enregistrement d'action de scénario selon les données de configuration d'instantané, dans lequel le troisième dispositif est transformé en premier dispositif qui a terminé la configuration dans le cas où la configuration d'un enregistrement d'action de scénario est terminée.

10. Procédé selon la revendication 9, dans lequel les données de configuration d'instantané comprennent un identifiant de dispositif d'au moins un troisième dispositif, et un identifiant d'action correspondant à une action de scénario du troisième dispositif.

11. Appareil de commande de dispositif (900) déployé dans un terminal serveur, dans lequel l'appareil (900) comprend :
un élément d'acquisition d'instruction (910) configuré pour obtenir une instruction de commande de scénario pour de multiples dispositifs sur la base d'un scénario construit pour les dispositifs, dans lequel l'instruction de commande de scénario est configurée pour ordonner à chacun des dispositifs d'exécuter une action de scénario correspondante dans le scénario construit ; dans lequel le scénario construit est construit en configurant respectivement des actions de scénario pour les multiples dispositifs ;
un élément de reconnaissance de dispositif (930) configuré pour identifier, sur la base de l'instruction de commande de scénario et en réalisant la détection de configuration d'enregistrements d'action de scénario sur les dispositifs, un premier dispositif et/ou un deuxième dispositif parmi les dispositifs, dans lequel les premiers dispositifs sont des dispositifs qui prennent en charge la configuration d'un enregistrement d'action de scénario et ont été configurés avec l'enregistrement d'action de scénario ; dans lequel le deuxième dispositif est un dispositif qui ne prend pas en charge la configuration d'un enregistrement d'action de scénario ; dans lequel l'enregistrement d'action de scénario est configuré pour le premier dispositif selon des données de configuration de scénario, et est un enregistrement d'une action de scénario que le premier dispositif est configuré et autorisé à exécuter dans le scénario construit ; dans lequel les données de configuration de scénario sont générées lorsqu'un scénario pour les multiples dispositifs est construit sur un terminal utilisateur ; et
un émetteur d'instructions (950) configuré pour : si au moins un premier dispositif est identifié, envoyer l'instruction de commande de scénario aux premiers dispositifs dans un mode de transmission multidiffusion afin d'ordonner aux premiers dispositifs de répondre à l'instruction de commande de scénario et d'exécuter de manière synchrone une action de scénario enregistrée pour les premiers dispositifs dans l'enregistrement d'action de scénario ; et/ou si au moins un deuxième dispositif est identifié, envoyer respectivement une instruction de commande de dispositif correspondant à l'instruction de commande de scénario aux deuxièmes dispositifs dans un mode de transmission monodiffusion, ce qui permet aux deuxièmes dispositifs de répondre respectivement à l'instruction de commande de dispositif et d'exécuter une action de scénario correspondante.

12. Système de commande de dispositif, dans lequel le système comprend :
un terminal serveur (300) configurée pour obtenir une instruction de commande de scénario pour de multiples dispositifs intelligents sur la base d'un scénario construit pour les multiples dispositifs, et, dans le cas où au moins un premier dispositif et/ou un deuxième dispositif sont identifiés parmi les dispositifs intelligents, envoyer l'instruction de commande de scénario au premier dispositif dans un mode de transmission multidiffusion, dans lequel l'instruction de commande de scénario est configurée pour ordonner aux dispositifs intelligents d'exécuter respectivement des actions de scénario correspondantes ; dans lequel le premier dispositif est un dispositif intelligent qui a été configuré avec un enregistrement d'action de scénario ; et/ou envoyer une instruction de commande de dispositif correspondant à l'instruction de commande de scénario aux deuxièmes dispositifs dans un mode de transmission monodiffusion, ce qui permet aux deuxièmes dispositifs de répondre respectivement à l'instruction de commande de dispositif et d'exécuter une action de scénario correspondante ; dans lequel le premier dispositif est un dispositif qui prend en charge la configuration d'un enregistrement d'action de scénario et a été configuré avec l'enregistrement d'action de scénario ; dans lequel le deuxième dispositif est un dispositif qui ne prend pas en charge la configuration d'un enregistrement d'action de scénario ; et
des dispositifs intelligents (400) configurés pour, en réponse à l'instruction de commande de scénario reçue, et sur la base de l'enregistrement d'action de scénario configuré, exécuter des actions de scénario qui les concernent dans l'enregistrement d'action de scénario.

13. Dispositif électronique (4000) comprenant au moins un processeur (4001) et au moins une mémoire (4003), dans lequel la mémoire (4003) stocke des instructions lisibles par ordinateur, les instructions lisibles par ordinateur sont exécutées par le ou les processeurs (4001) pour amener le dispositif électronique (4000) à mettre en œuvre le procédé de commande de dispositif selon l'une quelconque des revendications 1 à 10.

14. Support de stockage stockant des instructions lisibles par ordinateur, dans lequel les instructions lisibles par ordinateur sont exécutées par un ou plusieurs processeurs pour mettre en œuvre le procédé de commande de dispositif selon l'une quelconque des revendications 1 à 10.
